# EUROPÄISCHE PATENTSCHRIFT

(11) **EP 2 575 141 B1**
(45) Veröffentlichungstag und Bekanntmachung des Hinweises auf die Patenterteilung: **30.03.2016**
(21) Anmeldenummer: 12006588.3
(22) Anmeldetag: 20.09.2012
(51) Int. Cl.: G21C 9/012, G21C 15/18, G21D 3/04, G21D 1/02, G21C 15/243, G21C 15/26, G21C 19/28

(54) **Kondensationskammerkühlsystem**
Condensation chamber cooling system
Système de refroidissement à chambre de condensation

(30) Priorität: 28.09.2011 DE 102011115177
(43) Veröffentlichungstag der Anmeldung: 03.04.2013
(73) Patentinhaber: Westinghouse Electric Germany GmbH, 68167 Mannheim (DE)
(72) Erfinder: Freis, Daniel, 68259 Mannheim (DE); Sassen, Felix, 68167 Mannheim (DE); Tietsch, Wolfgang, 68309 Mannheim (DE)
(74) Vertreter: Fritsch, Klaus

(56) Entgegenhaltungen:
- EP-A2- 0 476 563
- DE-A1- 4 416 140
- US-B1- 6 285 727

## Beschreibung

Die Erfindung betrifft eine *Kondensationskammer mit* Kondensationskammerkühlsystem, umfassend eine Kondensationskammer für einen Siedewasserreaktor und wenigstens einen außerhalb der Kondensationskammer angeordneten Wärmetauscher.

Es ist allgemein bekannt, dass Leichtwasserreaktoren zur Stromerzeugung genutzt werden. Hierbei erzeugt nuklearer Brennstoff, beispielsweise in Form von Uranbrennstäben, in einem Reaktorkern in einem nuklearen Spalt- und Zerfallsprozess Wärme. In jedem Fall ist durch eine Wärmeabfuhr aus dem Reaktorkern dafür zu sorgen, dass dieser innerhalb eines unkritischen Temperaturbereiches bleibt. Bei Leichtwasserreaktoren (Druck- und Siedewasserreaktoren) ist der Reaktorkern innerhalb eines Druckbeziehungsweise Sicherheitsbehälters angeordnet. Dieser bildet bei Druckwasserreaktoren mit einem Dampferzeuger und den Zu- bzw. Ableitungen ein geschlossenes System zum Umlauf von Kühlmittel, das eigentliche Kernreaktorkühlsystem. Zur Abfuhr der durch den Kontakt des Kühlmittels mit den Brennelementen übertragenden Wärme dienen bei einem Druckwasserreaktor im normalen Betrieb der Dampferzeuger und die nachgeschaltete Dampfturbine mit ihrem Kondensator. Bei Siedewasserreaktoren entfallen die Dampferzeuger, d. h. der Dampf aus dem Reaktor wird zum Antrieb der Wasserdampfturbinen direkt genutzt wobei so die Wärme des Kühlmittels abgegeben wird. Eine typische Reaktorleistung beträgt beispielsweise 1,4GW.

Aber auch wenn ein Leichtwasserreaktor, beispielsweise zu Wartungszwecken, komplett heruntergefahren worden ist, erzeugt er für einen längeren Zeitraum eine Restwärme, die Nachzerfallswärme. Wird diese nicht zuverlässig abgeführt, kann es zu einer unerlaubten Temperaturerhöhung des Reaktorkerns mit möglichen Brennelementeschäden bis hin zur Kernschmelze kommen.

Ist bei einem Siedewasserreaktor der Reaktorkern mit Wasser überdeckt, kann von einer ausreichenden Kühlung ausgegangen werden. Bei Siedewasserreaktoren wird die nach einer Abschaltung entstehende Nachzerfallswärme durch Sieden des die Brennelemente umgebenden Wassers abgeführt. Durch Verdampfen des Wassers erfolgt ein der jeweiligen Verdampfungsenergie entsprechender Kühleffekt der Brennelemente. Der so entstehende Dampf wird über Sicherheitsventile in eine Wasservorlage außerhalb des Druck- beziehungsweise Sicherheitsbehälters in eine sogenannte Kondensationskammer abgeblasen und dort kondensiert. Das durch Abblasen Dampfes in die Kondensationskammer verlorene Wasserinventar des Druckbehälters wird typischerweise durch aktive Einspeisesysteme aus der Kondensationskammer zurück in den Druckbehälter geführt.

Beim Kondensieren, also beim Übergang des gasförmigen Dampfes in seinen flüssigen Zustand, erfolgt eine jeweilige Energieabgabe, welche zu einer Erhitzung des in der Kondensationskammer befindlichen Wassers führt. Daher sind entsprechend dem Stand der Technik aktive Not- und Nachkühlsysteme vorgesehen, mittels welcher über entsprechende Wärmetauscher und Wärmekreisläufe eine Kühlung der Kondensationskammer beziehungsweise der in dieser befindlichen Wasservorlage und eine Wärmeübertragung an eine externe Wärmesenke, beispielsweise einen Kühlturm, erfolgt.

*Das Patentdokument* EP 0476 563 A2 *offenbart einen Kernreaktor mit Reaktordruckbehälter und einem Kühlsystem.*

*Das Patentdokument* DE 44 16 140 A1 *offenbart eine Kernreaktoranlage mit einem Containment, welches einen Reaktordruckbehälter umgibt und darin einen Trockenschacht bildet, der üblicherweise ein nicht-kondensierbares Gas, wie beispielsweise Stickstoff enthält. In dem Druckbehälter ist ein üblicher Reaktorkern angeordnet, der in Wasser eingetaucht ist und das Wasser erhitzt, um Dampf zu erzeugen, der von dem Druckbehälter abgegeben wird.*

*Das Patentdokument* US 6 285 727 B1 *offenbart eine Kernreaktoranlage mit einem Leichtwasserreaktor und einer Sicherheitshülle, welche einen oberen Raum und einen unteren Raum hat, wobei der untere Raum von dem oberen Raum durch ein Trennglied getrennt ist und zur Aufnahme eines Kühlmittels bestimmt ist und wobei zum Leichtwasserreaktor ein Reaktorgefäß gehört, welches einen Reaktorkern aufnimmt und in dem oberen Raum angeordnet ist.*

Als nachteilig erweist es sich hierbei, dass derartige Kühlsysteme zur Abführung der in die Kondensationskammer eingetragenen Kondensationswärme aktiver Natur sind, also aktive Komponenten wie beispielsweise Umlaufpumpen für das Kühlmedium Wasser erfordern. Trotz höchster Sicherheitsmaßnahmen und redundanter Auslegung der jeweiligen Kühlsysteme kann nicht vollständig ausgeschlossen werden, den, dass ein aktiver Kühlkreislauf nach Ausfall beispielsweise seiner Umlaufpumpe in einem Störfall nicht zur Verfügung steht.

Ausgehend von diesem Stand der Technik ist es Aufgabe der Erfindung ein Kondensationskammerkühlsystem anzugeben, welches aktive Komponenten und insbesondere Umlaufpumpen möglichst vermeidet.

Diese Aufgabe wird gelöst durch ein Kondensationskammerkühlsystem der eingangs genannten Art. Dieses ist dadurch gekennzeichnet, dass in der Kondensationskammer ein längliches Kühlmodul vorgesehen ist, mit einem in seinem oberen Bereich befindlichen Verdampfungsraum, wobei das Kühlmodul derart in der Kondensationskammer angeordnet ist, dass der Verdampfungsraum oberhalb eines Höchstfüllstandniveaus einer Wasservorlage in der Kondensationskammer befindlich ist. Fernerhin umfasst das erfindungsgemäße Kondensationskammerkühlsystem wenigstens ein Steig- und ein Fallrohr, welche mit ihren jeweiligen oberen Enden in den Verdampfungsraum münden und mit ihren jeweiligen unteren Enden in der Kondensationskammer unterhalb eines Mindestfüllstandsniveaus der Wasservorlage, wobei eine erste Druckleitung vom Verdampfungsraum zum Wärmetauscher vorgesehen ist und von dort eine zweite Druckleitung, welche in der Kondensationskammer vorzugsweise unterhalb des Mindestfüllstandsniveaus mündet, so dass durch die Kondensationskammer, die Druckleitungen, das Kühlmodul und den Wärmetauscher ein passiver geschlossener Kühlkreislauf gebildet ist.

Die Grundidee der Erfindung besteht darin, ein Kondensationskammerkühlsystem mit Naturumlauf des Kühlmittels beziehungsweise Wassers bereitzustellen, somit eine aktive Umlaufpumpe zu vermeiden und damit die Ausfallwahrscheinlichkeit des Kühlsystems zu reduzieren.

Bei Ausfall der aktiven Nachwärmeabfuhrsysteme im Anforderungsfall heizt sich das Kondensationskammerwasser beziehungsweise die Wasservorlage auf und der Druck innerhalb des Druck- beziehungsweise Sicherheitsbehälters steigt an. Damit steigt auch der Druck in der damit verbundenen Kondensationskammer an. Die flüssige Phase des Wassers in der Kondensationskammer und die darüber befindliche gasförmige Phase befinden sich nach einer gewissen Zeit im Sättigungsgleichgewicht, das heißt, das Kondensationskammerwasser weist eine Sättigungstemperatur entsprechend dem Sicherheitsbehälterinnendruck auf.

Das Steig-Fallrohr befindet sich in vorzugsweise etwa senkrechter Anordnung komplett innerhalb der Kondensationskammer und ragt mit seinem unteren Ende in das flüssige Kondensationskammerwasser. Das flüssige Wasser innerhalb des Steig-Fallrohres erwärmt sich ebenfalls auf die Temperatur innerhalb der Kondensationskammer, welche beispielsweise als Torus- ähnlicher Ring um den unteren Bereich des Sicherheitsbehälters ausgestaltet sein kann. Der Wasserspiegel innerhalb des Steig-Fallrohres ist jedoch geodätisch höher als der Wasserspiegel beziehungsweise das Füllstandsniveau der Kondensationskammer.

Aufgrund des geodätischen Höhenunterschiedes des Wasserspiegels in der Kondensationskammer und des Wasserspiegels im Steig-Fallrohr beziehungsweise im Verdampfungsraum, in welchen die Rohre mit ihren jeweiligen oberen Enden münden, ist der statische Druck im Verdampfungsraum bei einem Höhenunterschied von beispielsweise 2m entsprechend geringer. Befindet sich das Kondensationskammerwasser wie zuvor erläutert auf Sättigungstemperatur, siedet das Wasser in dem oberhalb des Wasserspiegels der Kondensationskammer befindlichen Verdampfungsraum beziehungsweise den entsprechenden Rohrabschnitten aufgrund des dort herrschenden geringeren statischen Drucks.

Der Siedevorgang führt zu einer Kühlung des in dem Verdampfungsraum befindlichen Wassers einerseits und einer Dampfentstehung andererseits. Das Steig-Fallrohr ist so ausgestaltet, dass Wasser auf Sättigungstemperatur über das Steigrohr in den Verdampfungsraum geführt wird und dort durch den Siedevorgang unter Dampfbildung gekühlt wird. Das gekühlte Wasser, welches dann eine entsprechend höhere Dichte aufweist als das Wasser auf Sättigungstemperatur, wird dann wieder über das Fallrohr der Wasservorlage innerhalb der Kondensationskammer zugeführt. Durch diesen Dichteunterschied ist ein natürlicher Umlauf des Wassers durch das Kühlmodul ermöglicht, welcher in vorteilhafter Weise keinerlei aktive Umlaufpumpe oder dergleichen erfordert.

Um ein unmittelbares Vermischen von in das Steigrohr eintretendem Wasser und aus dem Fallrohr austretendem gekühlten Wasser zu vermeiden, sind deren jeweilige untere Mündungen vorzugsweise versetzt zueinander angeordnet.

Der in dem Verdampfungsraum entstehende Dampf wird von dort durch die erste Druckleitung, einer Dampfleitung, zum vorzugsweise einen Kondensator umfassenden Wärmetauscher geleitet, wo der Dampf durch Kondensation Wärme an den Wärmetauscher abgibt. Dieser führt die Wärme dann direkt oder indirekt an eine externe Wärmesenke ab, beispielsweise an einen Kühlturm. So kann der Wärmetauscher aber auch über ein Wasserreservoir verfügen, welches die Kondensationswärme aufnimmt und mittels eines weiteren Wasserumlaufs ableitet. Das beim Kondensieren entstehende Kondensat wird über die zweite Druckleitung, einer Kondensatleitung, vom Kondensator zurück in die Kondensationskammer geleitet. Idealerweise ist der Wärmetauscher auf einer derartigen geodätischen Höhe oberhalb der Kondensationskammer angeordnet, dass das Kondensat über die vorzugsweise mit einem steten Gefälle ausgestalteten Kondensatleitung alleine schwerkraftbedingt in die Kondensationskammer zurückfließt. Somit ist auch für diesen Kühlmittelkreislauf in vorteilhafter Weise kein aktives Pumpelement notwendig.

Auf diese Weise können auch bei vergleichsweise niedrigen Wassertemperaturen, beispielsweise 120°C oder 140°C, hohe Wärmeströme realisiert werden, weil das zu kühlende Medium, nämlich das in der Kondensationskammer befindliche Wasser, direkt auch als Kühlmittel für den Kühlkreislauf verwendet wird. Damit entfallen in vorteilhafter Weise ein sonst notwendiger Wärmetauschvorgang zwischen Kühlmittel und zu kühlendem Medium und die dafür erforderlichen Wärmetauscher.

Entsprechend einer bevorzugten Ausgestaltung des erfindungsgemäßen Kondensationskammerkühlsystems ist das Fallrohr in das Steigrohr verschachtelt, so dass ein äußeres Steigrohr und ein darin verlaufendes inneres Fallrohr gebildet sind. Dies erweist sich als fertigungstechnisch als besonders günstig und ermöglicht zudem eine hohe mechanische Stabilität des erfindungsgemäßen Kühlmoduls.

Gemäß einer weiteren Ausgestaltung des erfindungsgemäßen Kondensationskammerkühlsystems umfasst dessen Wärmetauscher einen Verdampfungskondensator.

Dieser ermöglicht wie zuvor erläutert aufgrund der abgegebenen Kondensationswärme einen sehr effektiven Wärmetausch.

Einer weiteren Ausgestaltungsvariante des Kondensationskammerkühlsystems entsprechend mündet eine Abblasleitung unterhalb des Mindestfüllstandsniveaus in der Kondensationskammer. Diese Leitung ist dafür vorgesehen, aus einem zugehörigen Siedewasserreaktor über ein Ablassventil abgelassenen Dampf in die Wasservorlage der Kondensationskammer einzuführen. Hierdurch wird das Kondensationskammerwasser entsprechend erhitzt. Vorzugsweise ist diese Leitung an ihrem Ende verästelt um so eine verbesserte Durchdringung des Wassers mit dem Dampf zu ermöglichen. Hierdurch wird die Kondensation des Dampfes und damit der auch die Effektivität des Kondensationskammerkühlsystems verbessert.

Entsprechend einer bevorzugten Variante des erfindungsgemäßen Kondensationskammerkühlsystems ist eine auf den Kühlkreislauf wirkende Vakuumpumpe vorgesehen. Während des normalen Anlagenbetriebes wird damit das passiv arbeitende Kondensationskammerkühlsystems evakuiert. Dadurch ist gewährleistet, dass sich ausschließlich flüssiges oder gasförmiges Wasser innerhalb des Rohrsystems beziehungsweise Kühlkreislaufes befindet. Während der Anforderung im Abschaltungsfall bleibt die Vakuumpumpe in Betrieb, um eine Ansammlung nichtkondensierbarer Gase zu vermeiden.

Gemäß einer besonders bevorzugten Ausgestaltung des erfindungsgemäßen Kondensationskammerkühlsystems ist der wenigstens eine Wärmetauscher geodätisch oberhalb der Kondensationskammer angeordnet. Dies ermöglicht bei entsprechender stetig fallend ausgeführter Kondensatleitung eine rein schwerkraftgetriebene Rückführung des Kondensats in die Kondensationskammer, so dass keine Pumpmittel erforderlich sind.

Vorzugsweise entspricht das Mindestfüllstandsniveau der Kondensationskammer zumindest annähernd deren Höchstfüllstandsniveau. Die Kühleigenschaften des Kondensationskammerkühlsystem werden dadurch konstant gehalten. Ein derartiges annähernd gleiches Füllstandsniveau wird durch entsprechende geregelte Rückführung von Kondensationskammerwasser in den Reaktor erreicht.

Eine besonders bevorzugte Variante des erfindungsgemäßen Kondensationskammerkühlsystem ist dadurch gekennzeichnet, dass wenigstens ein zusätzlicher aktiver Kühlkreislauf zur Abführung von Abwärme aus der Kondensationskammer vorgesehen ist. Somit ist ein Gesamtkühlsystem für die Kondensationskammer geschaffen, welches diversitär ist, also auf verschieden arbeitenden Kühlsystemen basiert. Der gleichzeitige Ausfall von diversitär arbeitenden Kühlsystemen ist unwahrscheinlicher als der gleichzeitige Ausfall von gleichartig arbeitenden Kühlsystemen. Somit ist in vorteilhafter Weise die Sicherheit eines derartigen Gesamtkühlsystems weiter gesteigert. Idealerweise ist zumindest das aktive Kühlsystem zudem noch redundant ausgelegt, also aus mehreren gegebenenfalls gleichartigen und parallel arbeitenden Einzelsystemen, deren summarische Kühlleistung unterhalb der maximal zu erwartenden Kühlleistung liegt, so dass trotz eines eventuellen Ausfalls eines Systems eine sichere Kühlung gewährleistet ist. Die zusätzliche Verwendung eines zuvor beschriebenen passiven Systems steigert die Betriebssicherheit weiter, wobei dessen Einzelausfallwahrscheinlichkeit aufgrund des passiven Prinzips besonders niedrig ist.

Erfindungsgemäß ist einer Ausgestaltungsvariante folgend ein Pumpsystem für die Rückführung von in der Kondensationskammer befindlichem Wasser in den zugehörigen Siedewasserreaktor vorgesehen. Dieses ist wie zuvor erwähnt zur Erhaltung des Wasserinventars des Siedewasserreaktors notwendig und kann auch als Teil des erfindungsgemäßen Kühlsystems angesehen werden.

Der Wärmetauscher ist erfindungsgemäß dafür vorgesehen ist, Abwärme an die Umgebung abzuführen. Dies kann gegebenenfalls über das Zwischenschalten weiterer Kühlkreisläufe und Wärmetauscher erfolgen, wobei ein Kühlturm eine bevorzugte Wärmesenke für die abschließende Wärmeabgabe an die Umgebung darstellt.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen
- Fig. 1: ein erstes exemplarisches Kühlmodul und
- Fig. 2: einen exemplarischen Siedewasserreaktor mit Kondensationskammerkühlsystem.

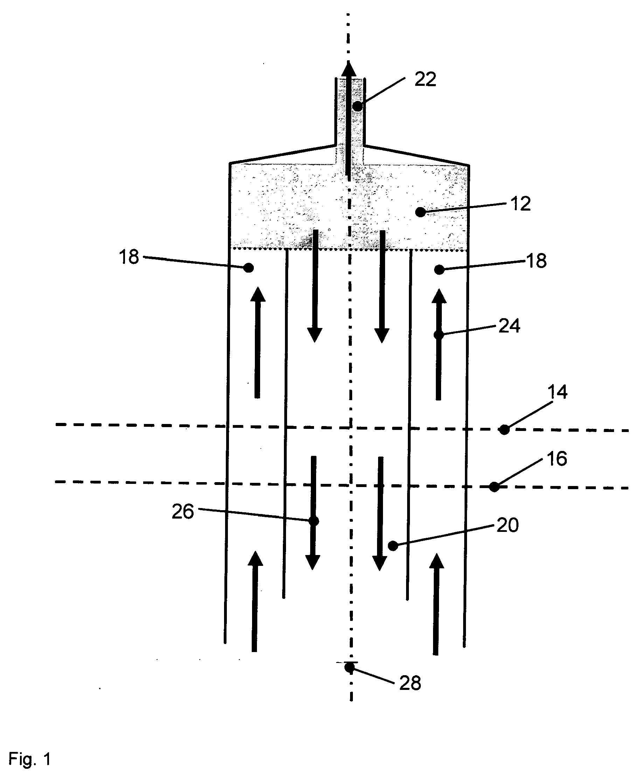

Fig. 1 zeigt ein erstes exemplarisches Kühlmodul 10 in einer Schnittansicht. Im oberen Bereich des senkrecht ausgerichteten Kühlmoduls 10 ist in seinem Innenraum ein Verdampfungsraum 12 vorgesehen. In diesen mündet von unten ein Steigrohr 18 und ein in dieses verschachtelt angeordnetes Fallrohr 20. In diesem Beispiel ist das Steig-Fallrohr als rotationssymmetrisch um eine Rotationsachse 28 angedeutet, es sind aber auch beliebige weitere Querschnittsformen denkbar, beispielsweise rechteckförmig oder auch nicht miteinander verschachtelte Varianten. Im oberen Bereich des Verdampfungsraumes 12 ist ein Anschluss 22 für eine erste Druckleitung beziehungsweise Dampfleitung angeordnet, welche zu einem nicht gezeigten Kondensator führt. Das Kühlmodul ragt in seinem unteren Bereich in das Wasser eines nicht gezeigten Kondensators, dessen Höchstfüllstandsniveau mit der gestrichelten Linie mit der Bezugsziffer 14 und dessen Mindestfüllstandsniveau mit der gestrichelten Linie mit der Bezugsziffer 16 angedeutet ist. Somit ist sichergestellt, dass stets Kondensationskammerwasser in das Steigrohr hineinströmen kann, wie mit dem Pfeil mit der Bezugsziffer 24 angedeutet.

Das Wasserstandsniveau des im Verdampfungsraum befindlichen Wassers ist geodätisch höher als das Höchst- und Mindestfüllstandsniveau in der Kondensationskammer, als innerhalb derer das Kühlmodul 10 angeordnet anzunehmen ist. Es ist ferner davon auszugehen, dass das Kondensationskammerwasser Sättigungstemperatur aufweist, das heißt, dass die flüssige und die darüber liegende gasförmige Phase des Wassers im Sättigungsgleichgewicht sind und dass das Kühlmodul 10 ebenfalls diese Temperatur angenommen hat. Aufgrund der geodätisch höheren Anordnung der Verdampfungsraum 12 siedet das darin befindliche Wasser unter den genannten Randbedingungen.

Dies hat einerseits den Effekt, dass das siedende Wasser gekühlt wird, also Wärme abgibt. Durch das Abkühlen des Wassers steigt dessen Dichte und es sinkt durch das Fallrohr 20 zurück unterhalb des Mindestfüllstandsniveaus, wie mit dem Pfeil 26 angedeutet, es ist also ein Naturumlauf des Wassers bewirkt. Damit ist eine sehr effektive Kühlung des Kondensationskammerwassers erreicht, weil dieses direkt als Kühlmittel verwendet wird, welches durch den Siedevorgang in sehr effektiver Weise Wärme abgibt.

Durch den Siedevorgang wird andererseits auch Dampf erzeugt, welcher dann durch den Anschluss 22 im oberen Bereich der Verdampfungsraum zu einem nicht gezeigten Kondensator geführt wird, wo durch Kondensation in ebenso effektiver Weise die Wärme abgegeben wird.

Ein geeignetes Material für ein erfindungsgemäßes Kühlmodul ist beispielsweise Edelstahl, wobei ein Kühlmodul - je nach Ausführung - beispielsweise eine Höhe von beispielsweise 1 m bis 2m aufweisen kann. Dieser Höhenunterschied ist ausreichend, um bei Sättigungstemperaturbedingungen ein Sieden in dem Verdampfungsraum 12 zu bewirken.

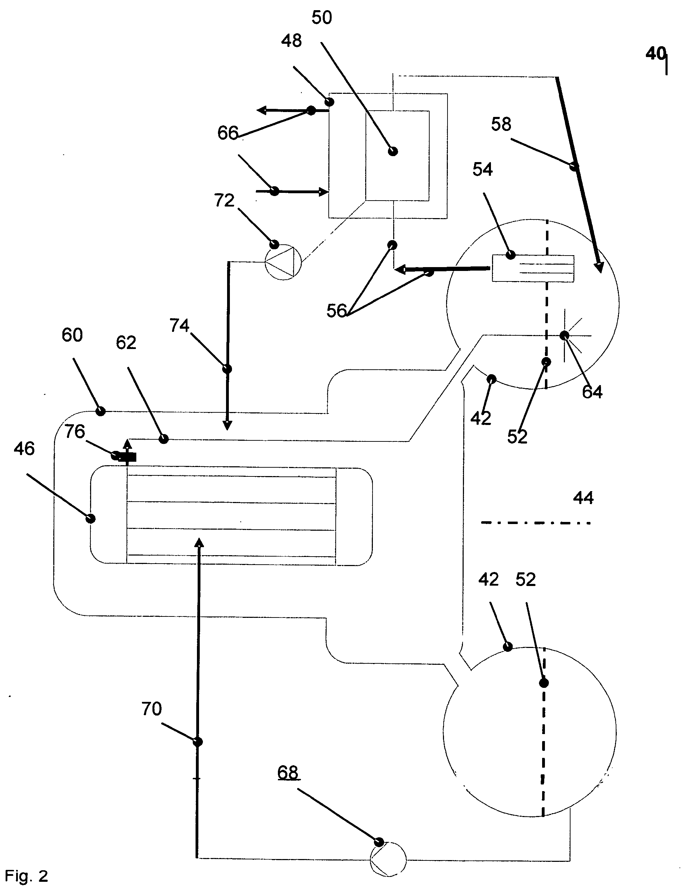

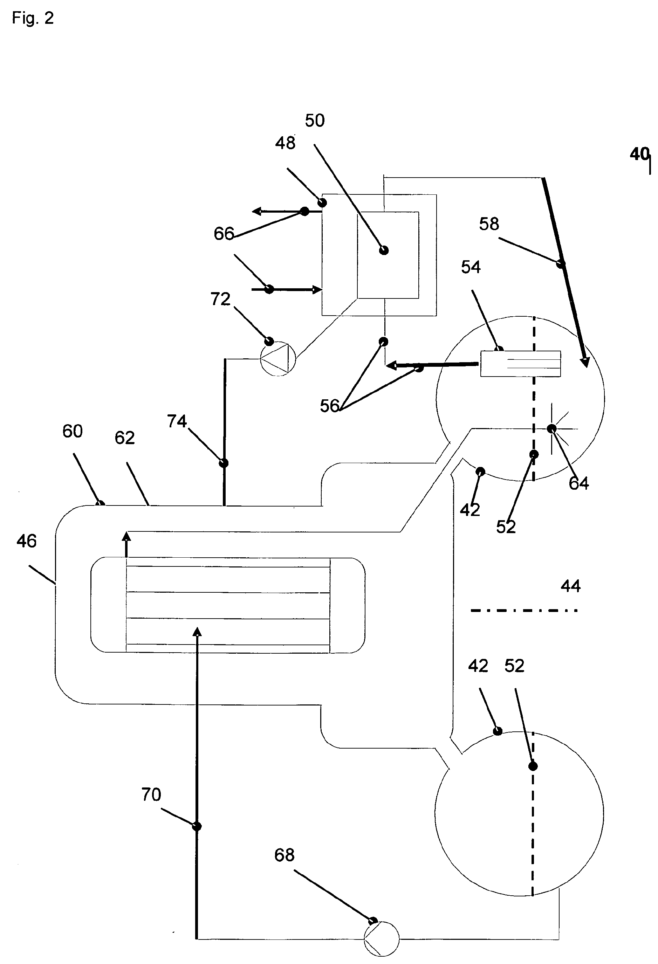

Fig. 2 zeigt einen exemplarischen Siedewasserreaktor mit Kondensationskammerkühlsystem in einer schematischen Ansicht 40. Ein Siedewasserreaktor 46 ist innerhalb eines Sicherheits- beziehungsweise Druckbehälters 60 angeordnet, welcher beispielsweise eine Höhe von 10m aufweist. Im unteren Bereich des Druckbehälters 60 ist torusförmig um diesen um eine Rotationsachse 44 angeordnet eine ringähnliche Kondensationskammer 42 vorgesehen, welche über entsprechende druckbeständige Rohrverbindungen mit dem Druckbehälter 60 verbunden ist. Die Kondensationskammer ist bis zu einem Füllstandsniveau 52 mit Kondensationskammerwasser gefüllt.

Vom Siedewasserreaktor 46 führt eine mittels eines Ablassventils 76 verschließbare Ablassleitung 62 in die Kondensationskammer 42 und mündet dort unterhalb des Füllstandsniveaus 52 in eine Verteilvorrichtung 64. Letztere stellt eine besonders gute Durchdringung des Kondensationskammerwassers von durch die Ablassleitung 62 strömenden Dampf sicher. Dampf wird dann aus dem Siedewasserreaktor 46 in die Ablassleitung 62 eingeführt, wenn dieser bei der Reaktorkühlung entstanden ist und mit ihm ein zu hoher Druck. Dieser Dampf führt bei Kondensierung in der Kondensationskammer zu einer Erhitzung des darin befindlichen Kondensationskammerwassers.

Senkrecht innerhalb der Kondensationskammer 42 und in das Kondensationskammerwasser ragend angeordnet ist ein Kühlmodul 54. Dieses weist eine Verdampferkammer und ein Steig-Fallrohr auf, wobei Wasser durch das Steigrohr in die Verdampferkammer aufsteigt, dort unter Abgabe von Dampf siedet, dadurch gekühlt wird und durch das Fallrohr wieder zurück nach unten fällt. Somit ist eine Kühlung des Kondensationskammerwassers bewirkt. Es ist somit ein weiterer natürlicher Kühlkreislauf gebildet.

Der dabei entstehende Dampf wird aus der Verdampferkammer über eine erste Druckleitung 56 zu einem Wärmetauscher 48 geführt, welcher insbesondere einen Kondensator 50 aufweist. Hier wird der Dampf unter Abgabe von Wärme in den flüssigen Wasserzustand überführt und vom Kondensator 50 über eine stetig fallende zweite Druckleitung 58 wieder zurück in die Kondensationskammer 42 geführt, wobei dies ausschließlich schwerkraftbedingt erfolgt. Der Wärmetauscher 48 ist seinerseits über entsprechende Zu- und Abführleitungen direkt oder indirekt mit einer Wärmesenke zur Wärmeabgabe an die Umgebung verbunden, beispielsweise einem Kühlturm.

Eine auf den Kühlkreislauf wirkende Vakuumpumpe 72 mit einer Rückführleitung 74 ist dafür vorgesehen, während des normalen Anlagenbetriebes das passiv arbeitende Kondensationskammerkühlsystems zu evakuieren. Dadurch ist gewährleistet, dass sich ausschließlich flüssiges oder gasförmiges Wasser innerhalb des Rohrsystems beziehungsweise Kühlkreislaufes befindet. Während der Anforderung bleibt die Vakuumpumpe 72 in Betrieb, um eine Ansammlung nichtkondensierbarer Gase zu vermeiden.

Mittels einer Einspeisepumpe 68 und einer Wasserrückführleitung 70 lässt sich Kondensationskammerwasser wieder zurück in den Siedewasserreaktor 46 führen, so dass dessen Wasserinventar trotz Ablassen von Dampf in die Kondensationskammer 42 erhalten bleibt.

### Bezugszeichenliste

- 10: erstes exemplarisches Kühlmodul
- 12: Verdampfungsraum
- 14: Höchstfüllstandniveau
- 16: Mindestfüllstandsniveau
- 18: Steigrohr
- 20: Fallrohr
- 22: Anschluss für erste Druckleitung
- 24: aufsteigendes Wasser
- 26: absteigendes gekühltes Wasser
- 28: Rotationsachse Kühlmodul
- 40: exemplarischer Siedewasserreaktor mit Kondensationskammerkühlsystem
- 42: Kondensationskammer
- 44: Rotationsachse von Kondensationskammer
- 46: Siedewasserreaktor
- 48: Wärmetauscher
- 50: Verdampfungskondensator
- 52: Füllstandsniveau
- 54: zweites exemplarisches Kühlmodul
- 56: erste Druckleitung
- 58: zweite Druckleitung
- 60: Sicherheits- Druckbehälter für Reaktor (Reaktorcontainment)
- 62: Ablassleitung
- 64: Verteilervorrichtung für Ablassleitung
- 66: Zu- Ableitung für Wärmetauscher
- 68: Einspeisepumpe
- 70: Wasserrückführleitung
- 72: Vakuumpumpe
- 74: Rückführleitung
- 76: Ablassventil

## Patentansprüche

1. *Kondensationskammer mit* Kondensationskammerkühlsystem, umfassend
• eine Kondensationskammer (42) für einen Siedewasserreaktor (46) und
• wenigstens einen außerhalb der Kondensationskammer (42) angeordneten Wärmetauscher (48),
**dadurch gekennzeichnet, dass**
• in der Kondensationskammer (42) ein längliches Kühlmodul (10, 54) vorgesehen ist, umfassend
• in seinem oberen Bereich einen Verdampfungsraum (12), wobei das Kühlmodul (10, 54) derart in der Kondensationskammer (42) angeordnet ist, dass der Verdampfungsraum (12) oberhalb eines Höchstfüllstandniveaus (14) der Kondensationskammer (42) befindlich ist,
• wenigstens ein Steig- (18) und ein Fallrohr (20), welche mit ihren jeweiligen oberen Enden in den Verdampfungsraum (12) münden und mit ihren jeweiligen unteren Enden in der Kondensationskammer (42) unterhalb eines Mindestfüllstandsniveaus (16),
wobei eine erste Druckleitung (56) vom Verdampfungsraum (12) zum Wärmetauscher (48) vorgesehen ist und von dort eine zweite Druckleitung (58), welche in der Kondensationskammer (42) mündet, so dass durch die Kondensationskammer (42), die Druckleitungen (56, 58), das Kühlmodul (10, 54) und den Wärmetauscher (48) ein passiver geschlossener Kühlkreislauf gebildet ist.

2. *Kondensationskammer mit* Kondensationskammerkühlsystem nach Anspruch 1, **dadurch gekennzeichnet, dass** das Fallrohr (20) in das Steigrohr (18) verschachtelt ist.

3. *Kondensationskammer mit* Kondensationskammerkühlsystem nach einem der Ansprüche 1 oder 2, **dadurch gekennzeichnet, dass** der Wärmetauscher (48) einen Verdampfungskondensator (50) umfasst.

4. *Kondensationskammer mit* Kondensationskammerkühlsystem nach einem der vorherigen Ansprüche, **dadurch gekennzeichnet, dass** eine Abblasleitung (62) unterhalb des Mindestfüllstandsniveaus (16) in der Kondensationskammer (42) mündet.

5. *Kondensationskammer mit* Kondensationskammerkühlsystem nach einem der vorherigen Ansprüche, **dadurch gekennzeichnet, dass** eine auf den Kühlkreislauf wirkende Vakuumpumpe (72) vorgesehen ist.

6. *Kondensationskammer mit* Kondensationskammerkühlsystem nach einem der vorherigen Ansprüche, **dadurch gekennzeichnet, dass** der wenigstens eine Wärmetauscher (48) geodätisch oberhalb der Kondensationskammer (42) angeordnet ist.

7. *Kondensationskammer mit* Kondensationskammerkühlsystem nach einem der vorherigen Ansprüche, **dadurch gekennzeichnet, dass** das Mindestfüllstandsniveau (16) zumindest annähernd dem Höchstfüllstandsniveau (18) entspricht.

8. *Kondensationskammer mit* Kondensationskammerkühlsystem nach einem der vorherigen Ansprüche, **dadurch gekennzeichnet, dass** ein zusätzlicher aktiver Kühlkreislauf zur Abführung von Abwärme aus der Kondensationskammer (42) vorgesehen ist.

9. *Kondensationskammer mit* Kondensationskammerkühlsystem nach einem der vorherigen Ansprüche, **dadurch gekennzeichnet, dass** ein Pumpsystem (68, 70) für die Rückführung von in der Kondensationskammer (42) befindlichem Wasser in den zugehörigen Siedewasserreaktor (46) vorgesehen ist.

10. *Kondensationskammer mit* Kondensationskammerkühlsystem nach einem der vorherigen Ansprüche, **dadurch gekennzeichnet, dass** der Wärmetauscher (48) dafür vorgesehen ist, Abwärme an die Umgebung abzuführen.

## Claims

1. Condensation chamber having a condensation chamber cooling system, comprising
• a condensation chamber (42) for a boiling water reactor (46) and
• at least one heat exchanger (48) arranged outside the condensation chamber (42),
**characterized in that**,
• in the condensation chamber (42), an elongate cooling module (10, 54) is provided, comprising
• in its upper region an evaporation space (12), the cooling module (10, 54) being arranged in the condensation chamber (42) in such a way that the evaporation space (12) is located above a maximum filling level (14) of the condensation chamber (42),
• at least one riser pipe (18) and one downpipe (20) which issue with their respective upper ends into the evaporation space (12) and with their respective lower ends in the condensation chamber (42) below a minimum filling level (16),
a first pressure line (56) from the evaporation space (12) to the heat exchanger (48) being provided and, from there, a second pressure line (58) which issues in the condensation chamber (42), so that the condensation chamber (42), the pressure lines (56, 58), the cooling module (10, 54) and the heat exchanger (48) form a passive closed cooling circuit.

2. Condensation chamber having a condensation chamber cooling system according to Claim 1, **characterized in that** the downpipe (20) is nested into the riser pipe (18).

3. Condensation chamber having a condensation chamber cooling system according to either one of Claims 1 and 2, **characterized in that** the heat exchanger (48) comprises an evaporation condenser (50).

4. Condensation chamber having a condensation chamber cooling system according to one of the preceding claims, **characterized in that** a blow-off line (62) issues below the minimum filling level (16) in the condensation chamber (42).

5. Condensation chamber having a condensation chamber cooling system according to one of the preceding claims, **characterized in that** a vacuum pump (72) acting upon the cooling circuit is provided.

6. Condensation chamber having a condensation chamber cooling system according to one of the preceding claims, **characterized in that** the at least one heat exchanger (48) is arranged geodetically above the condensation chamber (42).

7. Condensation chamber having a condensation chamber cooling system according to one of the preceding claims, **characterized in that** the minimum filling level (16) corresponds at least approximately to the maximum filling level (18).

8. Condensation chamber having a condensation chamber cooling system according to one of the preceding claims, **characterized in that** an additional active cooling circuit is provided for the discharge of waste heat from the condensation chamber (42).

9. Condensation chamber having a condensation chamber cooling system according to one of the preceding claims, **characterized in that** a pumping system (68, 70) is provided for the return of water located in the condensation chamber (42) into the associated boiling water reactor (46).

10. Condensation chamber having a condensation chamber cooling system according to one of the preceding claims, **characterized in that** the heat exchanger (48) is provided for discharging waste heat into the surroundings.

## Revendications

1. Chambre de condensation comprenant un système de refroidissement pour chambre de condensation, comprenant
- une chambre de condensation (42) pour réacteur à eau bouillante (46) et
- au moins un échangeur de chaleur (48) disposé à l'extérieur de la chambre de condensation (42),
**caractérisée en ce que**
- un module de refroidissement allongé (10, 54) est prévu dans la chambre de condensation (42), lequel comprend
- dans sa région supérieure, un espace d'évaporation (12), le module de refroidissement (10, 54) étant disposé dans la chambre de condensation (42) de telle sorte que l'espace d'évaporation (12) soit situé au-dessus d'un niveau de remplissage maximal (14) de la chambre de condensation (42),
- au moins un tube montant (18) et un tube descendant (20) qui débouchent avec leur extrémité supérieure respective dans l'espace d'évaporation (12) et avec leur extrémité inférieure respective dans la chambre de condensation (42) en dessous d'un niveau de remplissage minimal (16),
une première conduite de pression (56) allant de l'espace d'évaporation (12) à l'échangeur de chaleur (48) étant prévue et partant de là, une deuxième conduite de pression (58) qui débouche dans la chambre de condensation (42), de telle sorte qu'un circuit de refroidissement fermé passif soit formé par la chambre de condensation (42), les conduites de pression (56, 58), le module de refroidissement (10, 54) et l'échangeur de chaleur (48).

2. Chambre de condensation comprenant un système de refroidissement pour chambre de condensation selon la revendication 1, **caractérisée en ce que** le tube descendant (20) est emboîté dans le tube montant (18).

3. Chambre de condensation comprenant un système de refroidissement pour chambre de condensation selon l'une quelconque des revendications 1 et 2, **caractérisée en ce que** l'échangeur de chaleur (48) comprend un condenseur d'évaporation (50).

4. Chambre de condensation comprenant un système de refroidissement pour chambre de condensation selon l'une quelconque des revendications précédentes, **caractérisée en ce qu'**une conduite de purge (62) débouche en dessous du niveau de remplissage minimal (16) dans la chambre de condensation (42).

5. Chambre de condensation comprenant un système de refroidissement pour chambre de condensation selon l'une quelconque des revendications précédentes, **caractérisée en ce qu'**une pompe à vide (72) agissant sur le circuit de refroidissement est prévue.

6. Chambre de condensation comprenant un système de refroidissement pour chambre de condensation selon l'une quelconque des revendications précédentes, **caractérisée en ce que** l'au moins un échangeur de chaleur (48) est disposé géodésiquement au-dessus de la chambre de condensation (42).

7. Chambre de condensation comprenant un système de refroidissement pour chambre de condensation selon l'une quelconque des revendications précédentes, **caractérisée en ce que** le niveau de remplissage minimal (16) correspond au moins approximativement au niveau de remplissage maximal (18).

8. Chambre de condensation comprenant un système de refroidissement pour chambre de condensation selon l'une quelconque des revendications précédentes, **caractérisée en ce qu'**un circuit de refroidissement actif supplémentaire est prévu pour évacuer la chaleur perdue hors de la chambre de condensation (42).

9. Chambre de condensation comprenant un système de refroidissement pour chambre de condensation selon l'une quelconque des revendications précédentes, **caractérisée en ce qu'**un système de pompe (68, 70) est prévu pour la recirculation de l'eau se trouvant dans la chambre de condensation (42) dans le réacteur à eau bouillante associé (46).

10. Chambre de condensation comprenant un système de refroidissement pour chambre de condensation selon l'une quelconque des revendications précédentes, **caractérisée en ce que** l'échangeur de chaleur (48) est prévu pour évacuer la chaleur perdue vers l'environnement.
